# EUROPEAN PATENT APPLICATION

(11) **EP 4 800 868 A1**
(43) Date of publication of application: **02.09.2026**
(21) Application number: 26160880.6
(22) Date of filing: 26.02.2026
(51) Int. Cl.: H02J 3/14, C25B 1/04, C25B 15/023, H02J 4/20

(54) **HYDROGEN PRODUCTION SYSTEM, HYDROGEN PRODUCTION METHOD, AND PROGRAM**

(30) Priority: 27.02.2025 JP 2025030630
(71) Applicant: DENSO CORPORATION, Kariya-city, Aichi-pref. 448-8661 (JP)
(72) Inventor: UMEDA, Hiroaki, Kariya-city, Aichi-pref., 448-8661 (JP); KABEYA, Satoki, Kariya-city, Aichi-pref., 448-8661 (JP); OHIRA, Koji, Kariya-city, Aichi-pref., 448-8661 (JP)
(74) Representative: TBK

(57) **Abstract**

A hydrogen production system 1 of the present disclosure includes an electrolytic device 2, a plurality of electrical power conversion devices 3 that convert three-phase AC power to DC power and supply the DC power to the electrolytic device 2, and a control device 4 that controls the electrical power conversion devices. The electrolytic device 2 is connected with the plurality of electrical power conversion devices 3 connected in parallel with each other. The control device 4 is configured to correct, when electrical power supply from some of the plurality of electrical power conversion devices 3 to the electrolytic device 2 is stopped, at least one of voltage and current of the electrical power conversion device 3 that is continuing electrical power supply to the electrolytic device 2 so that a later hydrogen production amount of the electrolytic device 2 approaches a predetermined target amount.

## Description

### BACKGROUND OF THE INVENTION

### 1. Technical Field

The present disclosure relates to a hydrogen production system, a hydrogen production method, and a program.

### 2. Related Art

As a system for producing hydrogen, a hydrogen production system is known which produces hydrogen by electrolyzing a raw material such as water. For example, as described in JP 6704998 B (Japanese Patent No. 6,704,998), such a hydrogen production system has an electrolytic cell stack for electrolyzing a raw material to extract hydrogen and a power supply that supplies electrical power to the electrolytic cell stack.

### SUMMARY OF THE INVENTION

However, such a hydrogen production system has the following points for improvement.

That is, in practice, when electrical power is supplied from a power supply to an electrolytic cell stack, for example, AC power supplied from an AC power supply is converted to DC power by an electrical power conversion device. Herein, in a case in which electrical power supply from the electrical power conversion device to the electrolytic cell stack is caused to be stopped when an abnormality of the electrical power conversion device is detected or when a necessity of replacing the electrical power conversion device occurs, the whole hydrogen production system has to be stopped. That is, there is a point that production of hydrogen cannot be continued.

In view of the above points, the present disclosure aims to provide a hydrogen production system and a hydrogen production method that can continue to produce a sufficient amount of hydrogen.

An aspect of the technology of the present disclosure is a hydrogen production system (1), including:
at least one electrolytic device (2, 21, 22, 23) that electrolyzes a raw material to produce hydrogen;
a plurality of electrical power conversion devices (3, 31, 32, 33, 34, 35, 36, 37, 38, 39) that convert three-phase AC power to DC power and supply the DC power to the electrolytic device; and
a control device (4) that controls at least one of the electrical power conversion devices, in which
the electrolytic device is connected with the plurality of electrical power conversion devices connected in parallel with each other, and
the control device is configured to:
   correct, when electrical power supply from some of the plurality of electrical power conversion devices to the electrolytic device is stopped, at least one of voltage and current of the electrical power conversion device that is continuing electrical power supply to the electrolytic device so that a later hydrogen production amount of the electrolytic device approaches a predetermined target amount; and
   set at least one of voltage and current of the electrical power conversion device to a corrected value.

Another aspect of the technology of the present disclosure is a method of producing hydrogen by a hydrogen production system (1) that includes:
at least one electrolytic device (2, 21, 22, 23) that electrolyzes a raw material to produce hydrogen; and
a plurality of electrical power conversion devices (3, 31, 32, 33, 34, 35, 36, 37, 38, 39) that convert three-phase AC power to DC power and supply the DC power to the electrolytic device, the electrolytic device being connected with the plurality of electrical power conversion devices connected in parallel with each other,
the method including
   correcting, when electrical power supply from some of the plurality of electrical power conversion devices to the electrolytic device is stopped, at least one of voltage and current of the electrical power conversion device that is continuing electrical power supply to the electrolytic device so that a later hydrogen production amount of the electrolytic device approaches a predetermined target amount; and
   setting at least one of voltage and current of the electrical power conversion device to a corrected value.

Furthermore, another aspect of the technology of the present disclosure is a program for controlling a hydrogen production system, the system including:
at least one electrolytic device (2, 21, 22, 23) that electrolyzes a raw material to produce hydrogen;
a plurality of electrical power conversion devices (3, 31, 32, 33, 34, 35, 36, 37, 38, 39) that convert three-phase AC power to DC power and supply the DC power to the electrolytic device; and
a control device (4) that controls at least one of the electrical power conversion devices, the electrolytic device being connected with the plurality of electrical power conversion devices connected in parallel with each other,
the program causing the control device to:
   correct, when electrical power supply from some of the plurality of electrical power conversion devices to the electrolytic device is stopped, at least one of voltage and current of the electrical power conversion device that is continuing electrical power supply to the electrolytic device so that a later hydrogen production amount of the electrolytic device approaches a predetermined target amount; and
   set at least one of voltage and current of the electrical power conversion device to a corrected value.

In the above hydrogen production system, the electrolytic device is connected with the plurality of electrical power conversion devices connected in parallel with each other. Hence, even when electrical power supply from some of the electrical power conversion devices to the electrolytic device is stopped, electrical power supply from other electrical power conversion devices to the electrolytic device can be continued.

Furthermore, the control device is configured to correct, when electrical power supply from some of the plurality of electrical power conversion devices to the electrolytic device is stopped, at least one of voltage and current of the electrical power conversion device that is continuing electrical power supply to the electrolytic device so that a later hydrogen production amount of the electrolytic device approaches a predetermined target amount, and set at least one of voltage and current of the electrical power conversion device to a corrected value. Hence, even when electrical power supply from some of the electrical power conversion devices to the electrolytic device is stopped, electrical power supply to the electrolytic device is compensated for by at least one of the electrical power conversion devices that are continuing electrical power supply, whereby decrease of the production amount of hydrogen of the whole hydrogen production system can be suppressed. That is, a hydrogen production system that can continue to produce a sufficient amount of hydrogen can be obtained.

In addition, according to the above hydrogen production method, even when electrical power supply from some of the electrical power conversion devices to the electrolytic device is stopped, the hydrogen production amount can be compensated for. That is, a hydrogen production method that can continue to produce a sufficient amount of hydrogen can be obtained.

As described above, according to the above aspects, a hydrogen production system, a hydrogen production method, and a program that can continue to produce a sufficient amount of hydrogen can be provided.

It is noted that reference signs in parentheses in the claims and aspects of the technology indicate a correspondence relationship with specific means described in embodiments described later and do not limit the technical scope of the present disclosure.

### BRIEF DESCRIPTION OF THE DRAWINGS

In the accompanying drawings:
FIG. 1 is an explanatory diagram of a hydrogen production system according to a first embodiment;
FIG. 2 is a flowchart illustrating a control process according to the first embodiment;
FIG. 3 is a diagram illustrating an example of variations of current with time of a plurality of electrical power conversion devices according to the first embodiment;
FIG. 4 is an explanatory diagram of a hydrogen production system according to a second embodiment;
FIG. 5 is a flowchart illustrating a control process according to the second embodiment;
FIG. 6 is a diagram illustrating an example of variations of the hydrogen production amounts with time of a plurality of electrolytic devices according to the second embodiment;
FIG. 7 is a flowchart illustrating a control process according to a third embodiment;
FIG. 8 is a diagram illustrating an example of variations of the hydrogen production amounts with time of a plurality of electrolytic devices according to the third embodiment;
FIG. 9 is an explanatory diagram of a hydrogen production system according to a fourth embodiment;
FIG. 10 is an explanatory diagram of the hydrogen production system in a state in which one electrolytic device is stopped according to the fourth embodiment;
FIG. 11 is a flowchart illustrating a control process according to the fourth embodiment;
FIG. 12 is an explanatory diagram of a circuit of an electrical power conversion device according to a fifth embodiment; and
FIG. 13 is an explanatory diagram of a circuit of an electrical power conversion device according to a sixth embodiment.

### DETAILED DESCRIPTION OF THE PREFERRED EMBODIMENTS

### (First Embodiment)

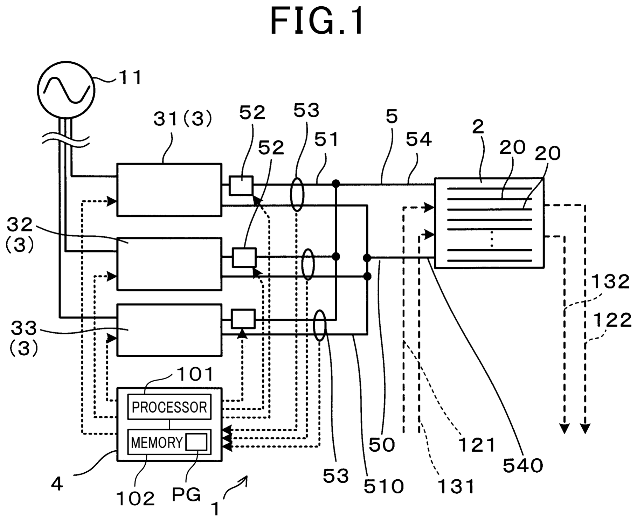

An embodiment regarding a hydrogen production system, a hydrogen production method, and a program will be described with reference to FIG. 1 to FIG. 3.

A hydrogen production system 1 of the present embodiment has, as illustrated in FIG. 1, an electrolytic device 2, a plurality of electrical power conversion devices 3, a control device 4, and power supply wirings 5, 50. In addition, the electrical power conversion devices 3 of the hydrogen production system 1 are connected with a three-phase AC power supply 11.

The electrolytic device 2 electrolyzes a raw material to produce hydrogen. The plurality of electrical power conversion devices 3 convert three-phase AC power to DC power and supply the DC power to the electrolytic device 2. The control device 4 controls the electrical power conversion devices 3. The electrolytic device 2 is connected with the plurality of electrical power conversion devices 3 connected in parallel with each other.

The control device 4 is configured to correct, when electrical power supply from some of the plurality of electrical power conversion devices 3 to the electrolytic device 2 is stopped, at least one of voltage and current of the electrical power conversion device 3 that is continuing electrical power supply to the electrolytic device 2 so that the later hydrogen production amount of the electrolytic device 2 approaches a predetermined target amount, thereby setting at least one of voltage and current of the electrical power conversion device 3 to a corrected value. In the present embodiment, while the electrical power supply from some of the electrical power conversion devices 3 to the electrolytic device 2 is stopped, at least one of voltage and current of the electrical power conversion device 3 that is continuing electrical power supply to the electrolytic device 2 is set to the corrected value.

It is noted that "voltage of the electrical power conversion device 3" means voltage of DC power outputted from the electrical power conversion device 3 unless otherwise specified, and "current of the electrical power conversion device 3" means current of DC power outputted from the electrical power conversion device 3 unless otherwise specified. In addition, the hydrogen production amount of the electrolytic device 2 means a hydrogen production amount per unit time produced by the electrolytic device 2.

In the present embodiment, as illustrated in FIG. 1, the hydrogen production system 1 has one electrolytic device 2 and three electrical power conversion devices 31, 32, 33. However, the number of the electrical power conversion devices 3 connected in parallel with each other is not particularly limited.

The three electrical power conversion devices 31, 32, 33 are connected in parallel with each other. The parallel circuit of the three electrical power conversion devices 31, 32, 33 is connected to the electrolytic device 2. In addition, the three electrical power conversion devices 31, 32, 33 are connected to the three-phase AC power supply 11. The electrical power conversion device 3 converts three-phase AC power to DC power. Then, the converted DC power is supplied to the electrolytic device 2.

Each of the three electrical power conversion devices 31, 32, 33 and the electrolytic device 2 are connected by the power supply wirings 5, 50. The power supply wiring 5 is a wiring on a high potential side. The power supply wiring 50 is a wiring on a low potential side. The power supply wiring 5 has a common wiring 54 connected to the electrolytic device 2 and three branch wirings 51 that branch off from the common wiring 54 and are respectively connected to the three electrical power conversion devices 31, 32, 33. The three branch wirings 51 are respectively provided with relays 52. That is, opening and closing of the relays 52 can switch between disconnection and connected of the respective electrical power conversion devices 31, 32, 33 with the electrolytic device 2. Normally, the relays 52 are in ON states. The relay 52 may be configured by, for example, an electromagnetic relay.

In addition, the power supply wiring 50 has also has, as in the power supply wiring 5, a common wiring 540 connected to the electrolytic device 2 and three branch wirings 510 that branch off from the common wiring 540 and are respectively connected to the three electrical power conversion devices 31, 32, 33.

In addition, the branch wirings 51, 510 of the respective power supply wirings 5, 50 are respectively provided with current sensors 53. That is, the current sensors 53 can detect currents outputted from the respective electrical power conversion devices 3.

The electrolytic device 2 has a cell stack configured by laminating a plurality of electrolysis cells 20. In the present embodiment, the electrolysis cell 20 is an SOEC (i.e., Solid Oxide Electrolyzer Cell). Each of the electrolysis cells 20 has an air electrode and a hydrogen electrode, and further includes an electrolyte intervening between the hydrogen electrode and the air electrode. The plurality of electrolysis cells 20 are connected in series with each other to configure the cell stack.

In the present embodiment, the hydrogen electrode is supplied with gas containing water vapor, and the air electrode is supplied with air. That is, water serving as a raw material is supplied to the hydrogen electrode in the state of water vapor. The water vapor is introduced to the electrolytic device 2 through a raw material supply flow path 121 and is supplied to the hydrogen electrodes of the respective electrolysis cells 20. The air is introduced to the electrolytic device 2 through an air supply flow path 131 and is supplied to the air electrodes of the respective electrolysis cells 20.

The electrolyte of the electrolysis cell 20 is formed of solid oxide ceramic and has conductivity to oxide ions (O²⁻). The electrolyte may be configured by using, for example, yttria-stabilized zirconia, perovskite oxide, or the like. Then, in a state in which the electrolyte is kept at a high temperature, for example, between 600°C and 800°C, electrical power is supplied between the air electrode and the hydrogen electrode to subject the water vapor to electrolytic reaction. Hence, the hydrogen electrode is caused to produce hydrogen, and the oxygen electrode is caused to produce oxygen.

That is, the water vapor supplied to the electrolysis cell 20 is subjected to electrolytic reaction of [H₂O + 2e⁻ → H₂ + O²⁻] at the hydrogen electrode. In addition, the water vapor is subjected to reaction of [O²⁻ → 1/2O₂ + 2e⁻] at the air electrode. That is, the water vapor is electrolyzed at the hydrogen electrode, thereby producing hydrogen gas and oxide ions (O²⁻). The oxide ions move to the air electrode side through the electrolyte and is oxidized at the air electrode, thereby becoming oxygen gas.

The gas including the hydrogen produced by the electrolytic reaction is discharged from the hydrogen electrode to the outside of the electrolytic cell 20 and is discharged from the electrolytic device 2 through a hydrogen discharge flow path 122. In addition, the gas including the produced oxygen is also discharged from the air electrode to the outside of the electrolytic cell 20 and is discharged from the electrolytic device 2 through an air discharge flow path 132.

In addition, in the present embodiment, the electrical power conversion device 3 supplies electrical power to the electrolytic device 2. Specifically, the electrical power conversion device 3 converts three-phase AC power supplied from the three-phase AC power supply 11 to DC power and supplies the DC power to the cell stack of the electrolytic device 2. As described above, the DC power is supplied between the air electrode and the hydrogen electrode of each of the electrolytic cells 20.

The control device 4 has a microcomputer including a processor 101, a memory 102, and the like, and peripheral circuits of the microcomputer. The control device 4 controls drive of the electrical power conversion devices 3. That is, the control device 4 controls at least one of current and voltage of the plurality of electrical power conversion devices 3. The control device 4 may be configured by a plurality of microcomputers and peripheral circuits thereof. Further, the microcomputer may be configured by a computer including one or more processors. In the present embodiment, the control device 4 controls current of the electrical power conversion devices 3. In addition, more specifically, the control device 4 is configured to correct, while electrical power supply from some of the plurality of electrical power conversion devices 3 to the electrolytic device 2 is stopped, at least one of voltage and current of the electrical power conversion device 3 that is continuing electrical power supply to the electrolytic device 2 so that the hydrogen production amount of the electrolytic device 2 approaches a predetermined target amount.

The control device 4 determines whether electrical power supply from some of the plurality of electrical power conversion devices 3 to the electrolytic device 2 has been stopped. Whether electrical power supply from some of the plurality of electrical power conversion devices 3 to the electrolytic device 2 has been stopped can be determined based on, for example, detection values from the current sensors 53.

In addition, the control device 4 can also control opening and closing of the relays 52. For example, when an abnormality has been detected in some of the plurality of electrical power conversion devices 31, the control device 4 opens the relay 52 provided to the branch wiring 51 connected to the electrical power conversion device 31 to stop electrical power supply from the electrical power conversion device 31 to the electrolytic device 2. The abnormality of the electrical power conversion device 31 can be detected based on, for example, a detection value from the current sensor 53. It is noted that, as the abnormality of the electrical power conversion device, for example, output overvoltage, output overcurrent, or the like of the electrical power conversion device can be considered. The abnormalities can be respectively detected by a voltage sensor, a current sensor, and the like.

In addition, when electrical power supply from one electrical power conversion device 31 to the electrolytic device 2 has been stopped, electrical power supply from other electrical power conversion devices 32, 33 to the electrolytic device 2 is increased. Specifically, currents flowing from other electrical power conversion devices 32, 33 to the electrolytic device 2 are increased. Hence, since the decrease of the hydrogen production amount due to the stopping of one electrical power conversion device 31 can be compensated for with the increase of the hydrogen production amount due to increase of outputs of other electrical power conversion device 32, 33, the amount of hydrogen produced by the electrolytic device 2 can be kept at the predetermined target amount.

Meanwhile, even when one electrical power conversion device 31 is replaced, it is conceivable that one relay 52 may be opened to stop electrical power supply from this electrical power conversion device 31 to the electrolytic device 2. For example, it is conceivable that, in order to prevent a malfunction of the electrical power conversion device 31 from occurring, the electrical power conversion device 31 may be replaced with a new one after operation for a predetermined time period. In this case, the electrical power conversion device 31 in question is disconnected from the hydrogen production system 1. Also in this case, as with the above, electrical power supply from other electrical power conversion devices 32, 33 to the electrolytic device 2 is increased to keep the amount of hydrogen produced by the electrolytic device 2 the predetermined target amount.

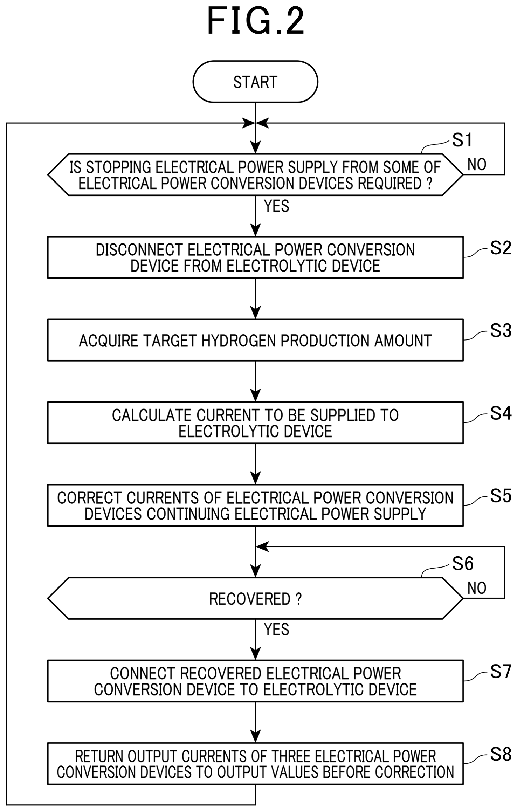

An example of a specific control method performed by the control device 4 will be described with reference to a flow diagram of FIG. 2. It is noted that the control method described below is implemented by the processor 101 in the control device 4 executing a computer program PG previously stored in the memory 102.

First, in step S1, it is determined whether a necessity of stopping electrical power supply from some of the electrical power conversion devices 3 to the electrolytic device 2 has arisen. This determination is made, for example, as described above, based on whether an abnormality has occurred in some of the electrical power conversion devices 3 and whether replacement is performed. For example, whether an abnormality has occurred in the electrical power conversion device 3 can be determined based on whether the control device 4 has received an abnormality detection signal from the electrical power conversion device 3 or a current value detected by the current sensor 53 described above. In addition, the determination whether replacement of the electrical power conversion device 3 should be performed can be made based on, for example, whether a signal indicating that replacement of the electrical power conversion device 3 is performed has been inputted to the control device 4 from the outside in accordance with operation by a replacement operator or the like when performing the replacement.

In step S1, when determining that a necessity of stopping electrical power supply from some of the electrical power conversion devices 3 (e.g., the electrical power conversion device 31) to the electrolytic device 2 has arisen, this electrical power conversion device 3 (e.g., the electrical power conversion device 31) is disconnected from the electrolytic device 2 (step S2). That is, the relay 52 provided on the output side of this electrical power conversion device 3 (e.g., the electrical power conversion device 31) is disconnected.

Next, a target amount of hydrogen (referred to as "target hydrogen production amount" as appropriate) produced by the electrolytic device 2 is acquired (step S3). As a manner of acquiring the target hydrogen production amount, for example, information concerning the target amount of hydrogen stored in the memory of the control device 4 may be acquired by reading the information or may be acquired from a device outside the hydrogen production system 1. The target hydrogen production amount can be equivalent to the amount of hydrogen that was produced normally by the electrolytic device 2, before one electrical power conversion device 3 (e.g., the electrical power conversion device 31) was disconnected from the electrolytic device 2. Alternatively, the target hydrogen production amount may be smaller than an amount of hydrogen that was produced normally by the electrolytic device 2 before the disconnection, and larger than the amount of hydrogen produced by the electrolytic device 2 using electrical power supplied from an electrical power conversion device 3 other than the one whose power supply is to be stopped (e.g., the electrical power conversion devices 32,33). More specifically, in the case of the present embodiment, the target hydrogen production amount may be an amount smaller than the amount of hydrogen that was produced by the electrolytic device 2 by the total supply power of the three electrical power conversion devices 31, 32, 33, and larger than the amount of hydrogen that was produced by the electrolytic device 2 by the total supply power by the two electrical power conversion devices 32, 33 that are continuing operation. Any target hydrogen production amount can be set as a target value for suppressing the decrease of the production amount of hydrogen produced by the hydrogen production system 1 when one electrical power conversion device 3 stops.

Based on the acquired target hydrogen production amount, a current to be supplied to the electrolytic device 2 is calculated (step S4). So that a current supplied to the electrolytic device 2 becomes the current calculated in step S4, currents output from the respective electrical power conversion devices 3 (e.g., the electrical power conversion devices 32, 33) are corrected (step S5). Then, electrical power supply from the electrical power conversion devices 3 (e.g., the electrical power conversion devices 32, 33) to the electrolytic device 2 is continued at the corrected current values (i.e. corrected values). The electrical power supply at the corrected currents is continued until the electrical power conversion device 3 (e.g., the electrical power conversion device 31) that has stopped electrical power supply is recovered (step S6).

Herein, "the recovery of the electrical power conversion device 3" means a state in which normal electrical power supply can be performed by the electrical power conversion device 3, a state in which replacement of the electrical power conversion device 3 with a new electrical power conversion device 3 is completed, or the like.

Then, in step S6, when determining that the electrical power conversion device 3 (e.g., the electrical power conversion device 31) has been recovered, the recovered electrical power conversion device 3 (e.g., the electrical power conversion device 31) is reconnected to the electrolytic device 2 (step S7). That is, for example, a relay 511 is turned on. At the same time, in step S8, output currents of the three electrical power conversion devices 31, 32, 33 are returned to values as they were before correction, and the electrical power supply is continued (step S8). Then, the control flow is returned to step S1.

It is noted that, for example, at least one of the above-described processes may be implemented by a circuit. This circuit may include one or more hardware logic circuits configured to execute specific processing.

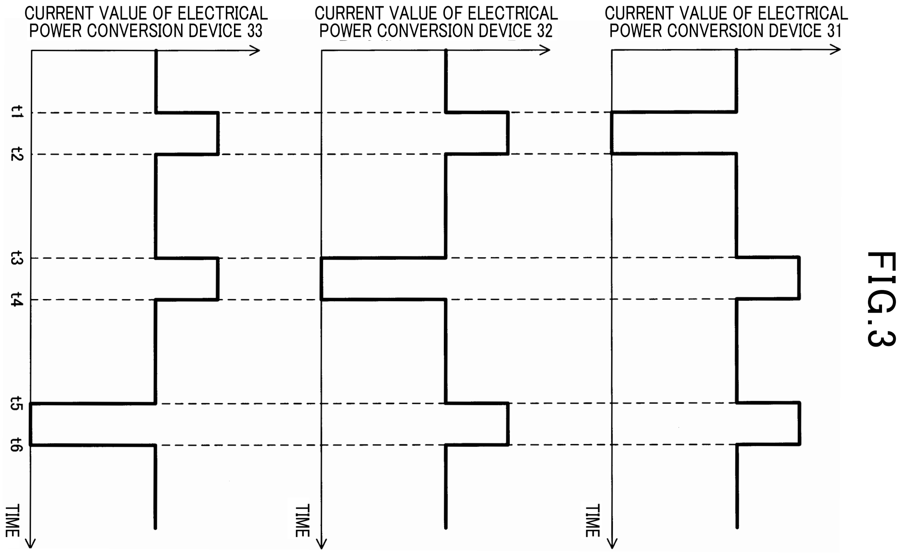

FIG. 3 illustrates an example of a manner of varying currents supplied from the three electrical power conversion devices 31, 32, 33 to the electrolytic device 2.

For example, when the electrical power conversion device 31 is stopped between time t1 and time t2, the current values of the electrical power conversion device 32 and the electrical power conversion device during this time period are made higher than the current values during normal functioning operation. When the electrical power conversion device 32 is stopped between time t3 and time t4, the current values of the electrical power conversion device 31 and the electrical power conversion device during this time period are made higher than the current values during normal functioning operation. When the electrical power conversion device 33 is stopped between time t5 and time t6, the current values of the electrical power conversion device 31 and the electrical power conversion device 32 during this time period are made higher than the current values during normal functioning operation. Herein, times of normal functioning operation refer to periods during which the three electrical power conversion devices 31, 32, 33 operate normally.

Thus, even when electrical power supply from some of the electrical power conversion devices 3 (e.g., the electrical power conversion device 31) is stopped, increasing currents from other electrical power conversion devices 3 (e.g., the electrical power conversion devices 32, 33) can suppress decrease of the total current supplied to the electrolytic device 2. Hence, even when electrical power supply from some of the electrical power conversion devices 3 (e.g., the electrical power conversion device 31) is stopped, the production of hydrogen can be continued while the hydrogen production amount of the electrolytic device 2 is kept at the predetermined target amount.

Next, effects of the hydrogen production system 1 and the hydrogen production method of the present embodiment will be described.

In the above hydrogen production system 1, the electrolytic device 2 is connected with the plurality of electrical power conversion devices 3 connected in parallel with each other. Hence, even when electrical power supply from some of the electrical power conversion devices 3 (e.g., the electrical power conversion device 31) to the electrolytic device 2 is stopped, electrical power supply from other electrical power conversion devices 3 (e.g., the electrical power conversion devices 32, 33) to the electrolytic device 2 can be continued.

Furthermore, the control device 4 is configured to correct, while electrical power supply from some of the plurality of electrical power conversion devices 3 (e.g., the electrical power conversion device 31) to the electrolytic device 2 is stopped, currents of the electrical power conversion devices 3 (e.g., the electrical power conversion devices 32, 33) that are continuing electrical power supply to the electrolytic device 2 so that the hydrogen production amount of the electrolytic device 2 approaches the predetermined target amount. Hence, even when electrical power supply from some of the electrical power conversion devices 3 (e.g., the electrical power conversion device 31) to the electrolytic device 2 is stopped, electrical power supply to the electrolytic device 2 is compensated for by the electrical power conversion devices 3 (e.g., the electrical power conversion devices 32, 33) that are continuing electrical power supply, whereby decrease of the production amount of hydrogen of the whole hydrogen production system can be suppressed, which can keep the hydrogen production amount at the predetermined target amount. That is, the hydrogen production system 1 can be obtained which can suppress the decrease of the production amount of hydrogen due to the stopping of electrical power supply from some of the electrical power conversion devices 3 to the electrolytic device 2, thereby continuing production of a sufficient amount of hydrogen.

In addition, according to the above hydrogen production method, even when electrical power supply from some of the electrical power conversion devices 3 (e.g., the electrical power conversion device 31) to the electrolytic device 2 is stopped, the hydrogen production amount can be kept at the predetermined target amount. That is, the hydrogen production method that can continue to produce a sufficient amount of hydrogen can be obtained.

As described above, according to the present embodiment, a hydrogen production system, a hydrogen production method, and a program that can continue to produce a sufficient amount of hydrogen can be provided.

### (Second Embodiment)

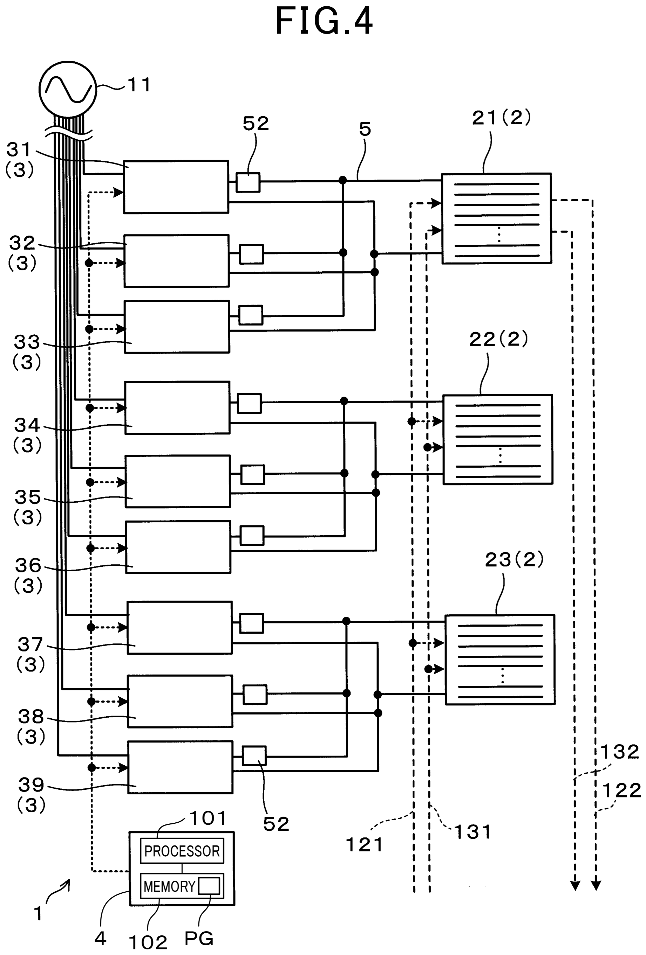

The hydrogen production system 1 of the present embodiment has, as illustrated in FIG. 4 to FIG. 6, a plurality of electrolytic devices 2. The plurality of electrolytic devices 2 are respectively connected with a plurality of electrical power conversion devices 3 connected in parallel with each other. The control device 4 is configured to correct at least one of voltage and current of the plurality of electrical power conversion devices 3 so that the total amount of hydrogen produced by the plurality of electrolytic devices 2 approaches a predetermined target amount.

The present embodiment describes, as illustrated in FIG. 4, an example in which the hydrogen production system 1 has three electrolytic devices 21, 22, 23, and the electrolytic devices 21, 22, 23 are respectively connected with three electrical power conversion devices 3. However, the number of the electrical power conversion devices 3 connected in parallel with each other is not particularly limited.

Specifically, as illustrated in FIG. 4, three electrical power conversion devices 31, 32, 33 are connected to the electrolytic device 21, three electrical power conversion devices 34, 35, 36 are connected to the electrolytic device 22, and three electrical power conversion devices 37, 38, 39 are connected to the electrolytic device 23.

The control device 4 controls the above nine electrical power conversion devices 3. Each of the electrical power conversion devices 3 receives a signal from a current sensor that detects a current of the electrical power conversion device 3 and transmits a control signal to the relay 52 provided between the electrical power conversion device 3 and the electrolytic device 2. The signal lines and the current sensors are not shown in FIG. 4.

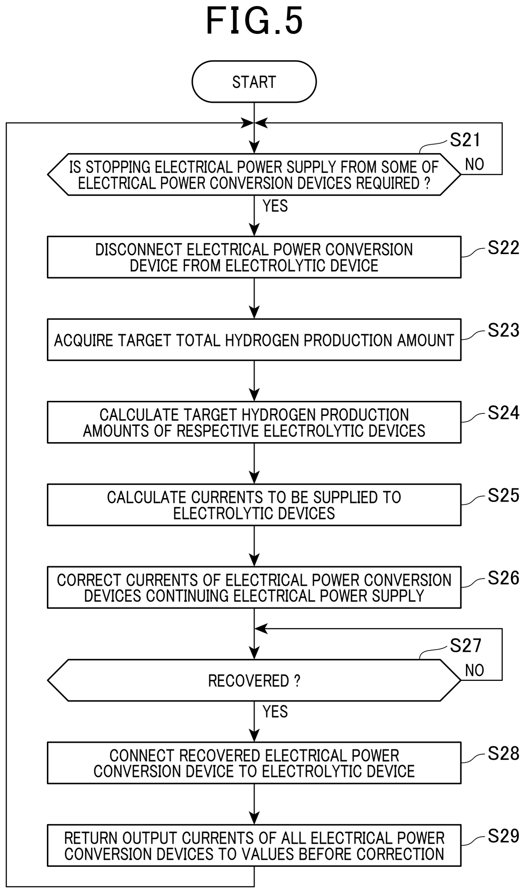

An example of a specific control method of the control device 4 of the present embodiment will be described with reference to a flow diagram of FIG. 5.

First, in step S21, it is determined whether a necessity of stopping electrical power supply from some of the electrical power conversion devices 3 to the electrolytic device 2 has arisen.

In step S21, when determining that a necessity of stopping electrical power supply from some of the electrical power conversion devices 3 (e.g., the electrical power conversion device 31) to the electrolytic device 2 has arisen, the electrical power conversion device 3 (e.g. the electrical power conversion device 31) is disconnected from the electrolytic device 2 (step S22). That is, the relay 52 provided on the output side of this electrical power conversion device 3 (e.g., the electrical power conversion device 31) is disconnected.

Next, the total target amount of hydrogen (referred to as "target total hydrogen production amount" as appropriate) produced by the three electrolytic devices 2 is acquired (step S23). The target amount can be equivalent to the total amount of hydrogen that was produced by the three electrolytic devices 2, before one electrical power conversion device 3 (e.g., electrical power conversion device 31) is disconnected from the electrolytic device 2. Then, target hydrogen production amounts of the respective electrolytic devices 2 are calculated based on the target total hydrogen production amount (step S24).

For example, when the electrical power conversion device 31 has been stopped, target hydrogen production amounts of the respective electrolytic devices 21, 22, 23 can also be calculated so that the decrease of the hydrogen production amount of the electrolytic device 21 due to the stopping of the electrical power conversion device 31 is compensated for with the increase of the hydrogen production amount by the electrolytic device 22 and the electrolytic device 23. This example is referred to as a calculation example 1 as appropriate.

Alternatively, it is conceivable that the target hydrogen production amount of the electrolytic device 21 may be set so that the ratio of the decrease of the hydrogen production amount of the electrolytic device 21 due to the stopping of the electrical power conversion device 31 is limited to less than 1/3, and the target hydrogen production amounts of other electrolytic devices 22, 23 may be set so that the shortage is compensated for by the electrolytic devices 22, 23.

Alternatively, the target hydrogen production amount can also be calculated so as to keep the target hydrogen production amount of the electrolytic device 21 equal to that before the stop of the electrical power conversion device 31. In this case, the target hydrogen production amounts of the respective electrolytic devices 21, 22, 23 are not required to be particularly changed. In addition, the manner of determining the target hydrogen production amounts of the respective electrolytic devices 21, 22, 23 is not limited to these, but various techniques can be employed.

Based on the acquired target hydrogen production amounts, currents to be supplied to the respective electrolytic devices 21, 22, 23 are calculated (step S25). So that currents supplied to the respective electrolytic devices 2 become the currents calculated in step S25, currents of the respective electrical power conversion devices 3 (e.g., the electrical power conversion devices 32 to 39) are corrected (step S26). Then, electrical power supply from the electrical power conversion devices 3 (e.g., the electrical power conversion devices 32 to 39) to the electrolytic devices 21, 22, 23 is continued at the corrected current value. The electrical power supply at the corrected current is continued until the electrical power conversion device 3 (e.g., the electrical power conversion device 31) that has stopped electrical power supply is recovered (step S27).

Then, in step S27, when determining that the electrical power conversion device 3 (e.g., the electrical power conversion device 31) has been recovered, the recovered electrical power conversion device 3 (e.g., the electrical power conversion device 31) is reconnected to the electrolytic device 21 (step S28). That is, the relay 52 on the output side of the recovered electrical power conversion device 3 is turned on. At the same time, in step S29, currents of the nine electrical power conversion devices 31 to 39 are returned to values before correction, and the electrical power supply is continued. Then, the control flow is returned to step S21.

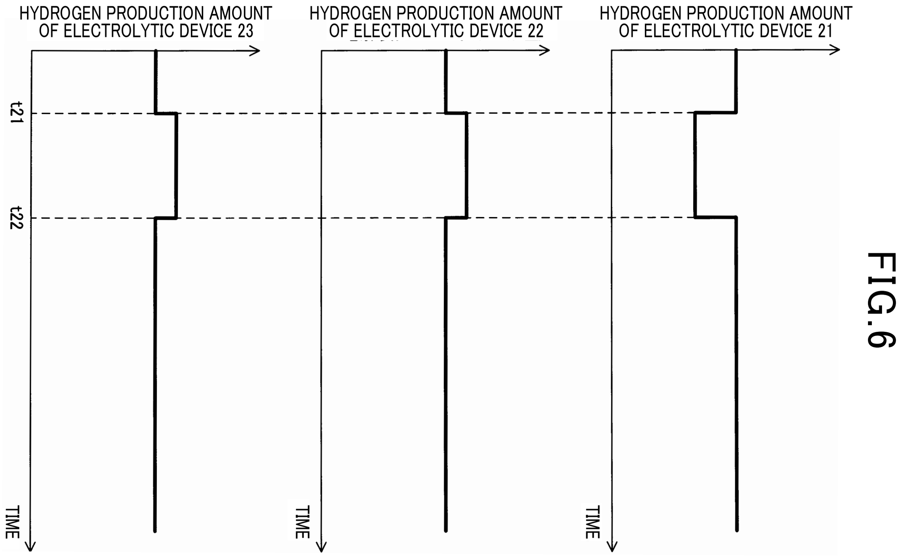

FIG. 6 illustrates an example of a manner of varying the target hydrogen production amounts of the three electrolytic devices 21, 22, 23. This example is based on the manner of determining the target hydrogen production amounts in the calculation example 1 described above. That is, for example, when the electrical power conversion device 31 is stopped between time t21 and time t22, the hydrogen production amount of the electrolytic device 21 decreases. During this time period, the target hydrogen production amounts of other electrolytic devices 22, 23 are increased. Hence, hydrogen production can be continued while the total hydrogen production amount of the three electrolytic devices 21, 22, 23 is kept at a target amount.

Other configurations are similar to those of the first embodiment. It is noted that, of the reference signs used in the second embodiment and the later embodiments, the same reference signs as those used in the above embodiment denote elements or the like similar to those in the above embodiment.

According to the present embodiment, when electrical power supply from one electrical power conversion device 3 is stopped, the number of variations of the manner of suppressing decrease in the total hydrogen production amount increases. Hence, redundancy of the whole system can be further improved. In addition, effects similar to those of the first embodiment are obtained.

### (Third Embodiment)

The hydrogen production system 1 of the present embodiment also has a plurality of electrolytic devices 2. The system configuration of the present embodiment is similar to that of the second embodiment illustrated in FIG. 4.

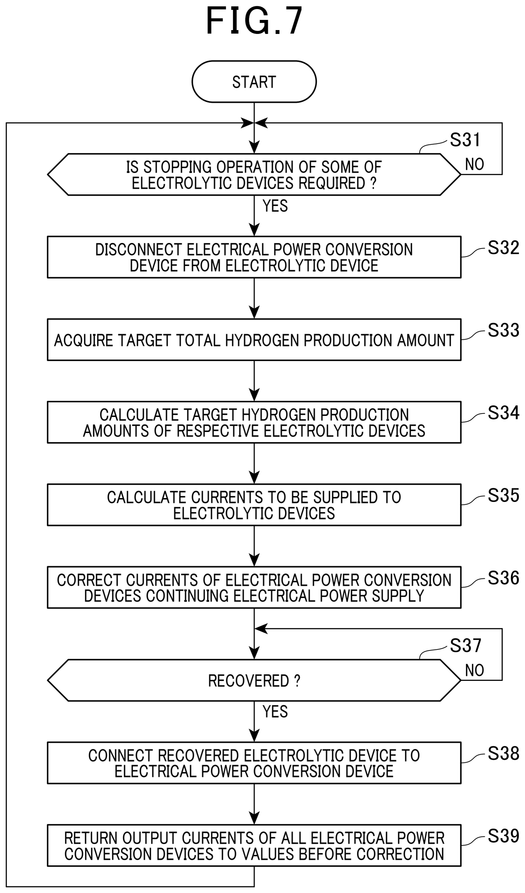

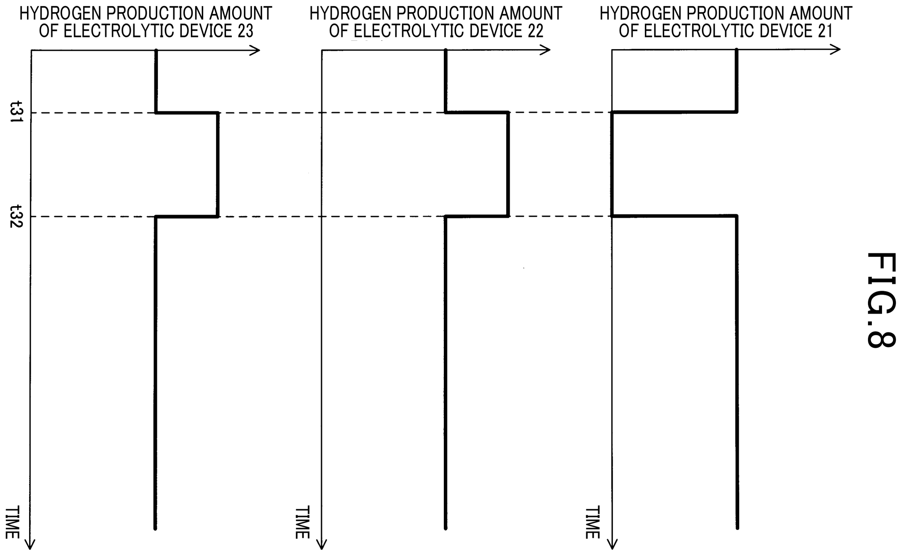

In the present embodiment, as illustrated in FIG. 7 and FIG. 8, the manner of control by the control device 4 differs from that of the second embodiment.

When operation of some of the electrolytic devices 2 (e.g., the electrolytic device 21) is stopped, at least one of voltage and current of the plurality of electrical power conversion devices 3 (e.g., the electrical power conversion devices 34 to 39) is corrected so that the total hydrogen production amount of other electrolytic devices 2 (e.g., the electrolytic devices 22, 23) that are continuing operation approaches a predetermined target amount. In the present embodiment, while operation of some of the electrolytic devices 2 (e.g., the electrolytic device 21) is stopped, at least one of voltage and current of the electrical power conversion device 3 is set to at least one of the corrected voltage and current (i.e., the corrected value).

An example of a specific control method of the control device 4 of the present embodiment will be described with reference to a flow diagram of FIG. 7.

First, in step S31, it is determined whether stopping operation of some of the electrolytic devices 2 (e.g., the electrolytic device 21) is required.

In step S31, when determining that a necessity of stopping operation of some of the electrolytic devices 2 (e.g., the electrolytic device 21) has arisen, the electrolytic device 2 (e.g., the electrolytic device 21) is disconnected from the plurality of electrical power conversion devices 3 (e.g., the electrical power conversion devices 31, 32, 33) (step S32). That is, the relays 52 between this electrolytic device 2 (e.g., the electrolytic device 21) and the electrical power conversion devices 3 (e.g., the electrical power conversion devices 31, 32, 33) are disconnected.

Next, the total target amount of hydrogen (referred to as "target total hydrogen production amount" as appropriate) produced by the two electrolytic devices 2 (e.g., the electrolytic devices 22, 23) that are continuing operation is acquired (step S33). The target amount can be equivalent to the total amount of hydrogen that was produced by the three electrolytic devices 2 immediately before one electrolytic device 2 (e.g., the electrolytic device 21) is disconnected. Then, target hydrogen production amounts of the respective two electrolytic devices 2 (e.g., the electrolytic devices 22, 23) that are continuing operation are calculated (step S34).

Based on the acquired target hydrogen production amounts, currents to be supplied to the respective electrolytic devices 2 (e.g., the electrolytic devices 22, 23) are calculated (step S35). So that currents supplied to the respective electrolytic devices 2 become the currents calculated in step S35, currents output from the respective electrical power conversion devices 3 (e.g., the electrical power conversion devices 34 to 39) are corrected (step S36). Then, electrical power supply from the electrical power conversion devices 3 (e.g., the electrical power conversion devices 34 to 39) to the electrolytic devices 22, 23 is continued at the corrected current values (i.e. corrected values). The electrical power supply at the corrected currents is continued until the electrolytic device 2 whose operation has stopped (e.g., the electrolytic device 21) is recovered (step S37). It is noted that "the recovery of the electrolytic device 2" means a state in which normal production of hydrogen can be performed by the electrolytic device 2, a state in which replacement of the electrolytic device 2 with a new electrolytic device 2 is completed, or the like.

Then, in step S37, when determining that the electrolytic device 2 (e.g., the electrolytic device 21) has been recovered, the recovered electrolytic device 2 (e.g., the electrolytic device 21) is reconnected to the three electrical power conversion devices 3 (e.g., the electrical power conversion devices 31, 32, 33) (step S38). That is, the relays 52 between the recovered electrolytic device 2 (e.g., the electrolytic device 21) and the electrical power conversion devices 3 (e.g., the electrical power conversion devices 31, 32, 33) are turned on. At the same time, in step S39, output currents of the nine electrical power conversion devices 31 to 39 are returned to values before correction, and the electrical power supply is continued. Then, the control flow is returned to step S31.

FIG. 8 illustrates an example of a manner of varying the target hydrogen production amounts of the three electrolytic devices 21, 22, 23. That is, for example, when the electrolytic device 21 is stopped between time t31 and time t32, the hydrogen production amount of the electrolytic device 21 becomes zero. During this time period, the target hydrogen production amounts of other electrolytic devices 22, 23 are increased. Hence, hydrogen production can be continued while the total hydrogen production amount of the two electrolytic devices 22, 23 that are continuing operation is kept at a target amount. Other configurations are similar to those of the first embodiment.

According to the present embodiment, even when operation of some of the plurality of electrolytic devices 2 is stopped, the production of hydrogen can be continued while the hydrogen production amount is kept at a target amount. In addition, effects similar to those of the first embodiment are obtained.

It is noted that a system that performs both of the control method illustrated in the second embodiment and the control method illustrated in the third embodiment may be configured. That is, a system may be configured which performs the control of the second embodiment when electrical power supply performed by some of the electrical power conversion devices 3 is stopped, and performs the control of the third embodiment when operation performed by some of the electrolytic devices 2 is stopped.

### (Fourth Embodiment)

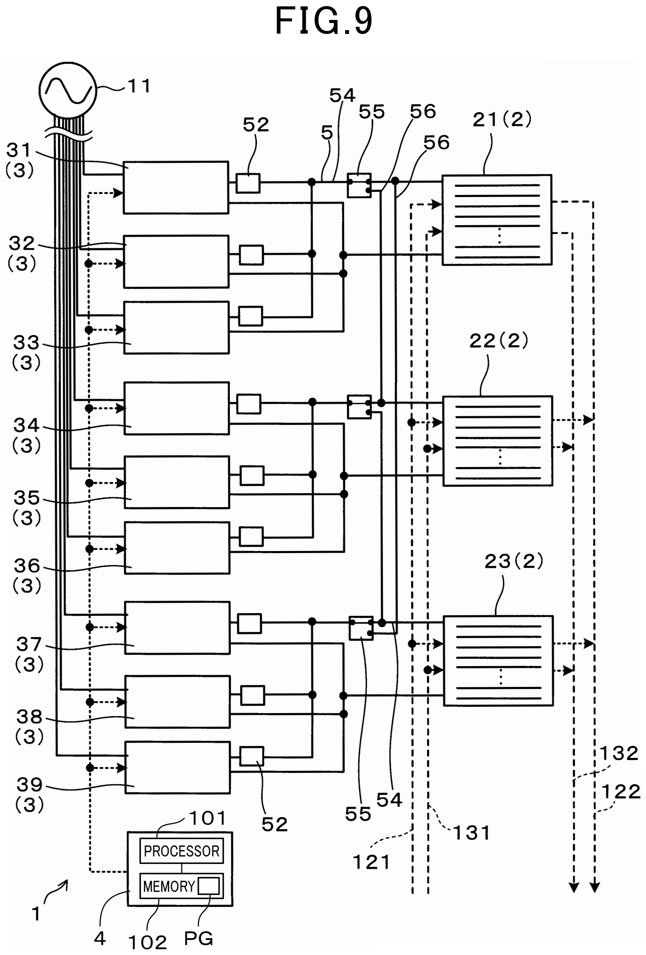

In the hydrogen production system 1 of the present embodiment, as illustrated in FIG. 9, each of the power supply wirings 5 respectively connected to the plurality of electrolytic devices 2 is provided with a switching relay 55 and a connected wiring 56.

Specifically, the common wiring 54 of the power supply wiring 5 connected to the electrolytic device 2 is provided with the switching relay 55. The switching relay 55 is also connected with the other end of the connected wiring 56 whose one end is connected to the common wiring 54 of another power supply wiring 5. During normal functioning operation, the switching relay 55 does not connect the connected wiring 56 to the common wiring 54 but provides connection of a path of the common wiring 54 between the electrical power conversion device 3 and the electrolytic device 2, as illustrated in FIG. 9.

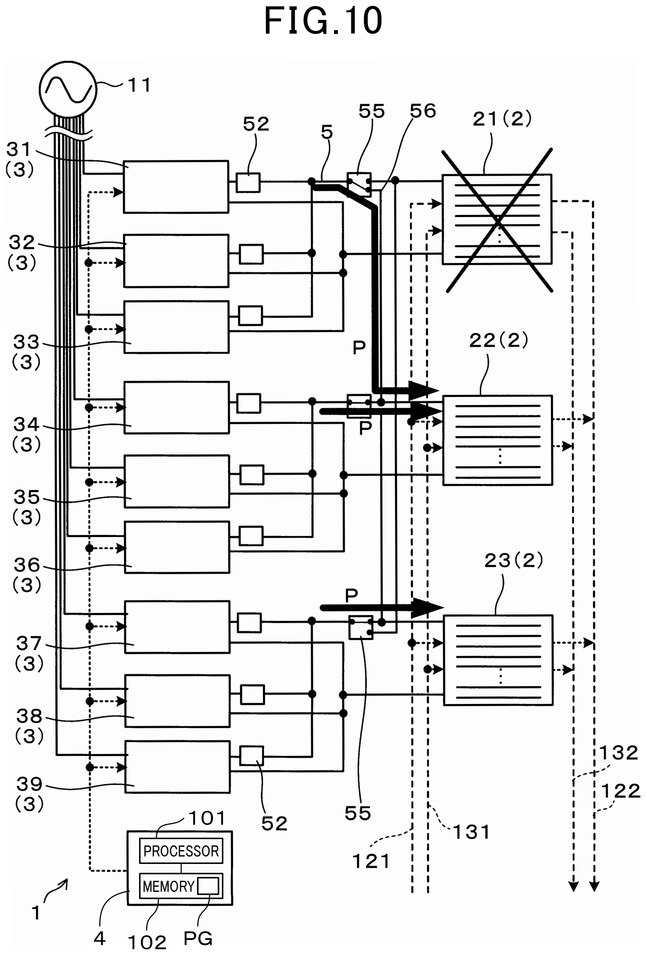

When the production of hydrogen by some of the plurality of electrolytic devices 2 (e.g., the electrolytic device 21) is stopped, the control device 4 switches the switching relay 55, which is connected to the electrolytic device 2, to the connected wiring 56 side. FIG. 10 illustrates this state. Arrows P in FIG. 10 indicate electrical power supply paths to the electrolytic devices 22, 23.

That is, the electrical power conversion device 3 that has been connected to the electrolytic device 2 (e.g., the electrolytic device 21) is connected to some of other electrolytic devices 22 (e.g., the electrolytic device 22). Then, currents of the plurality of electrical power conversion devices 3 are corrected so that the total amount of hydrogen produced by the electrolytic devices 2 (e.g., the electrolytic devices 22,23) that are continuing the production of hydrogen approaches a predetermined target amount. In the present embodiment, while the production of hydrogen by some of the electrolytic devices 2 (e.g., the electrolytic device 21) is stopped, the switching relay 55 connected to the electrolytic devices 2 is connected to the connected wiring 56 side. Then, during this, currents of the plurality of electrical power conversion devices 3 are set to the corrected values.

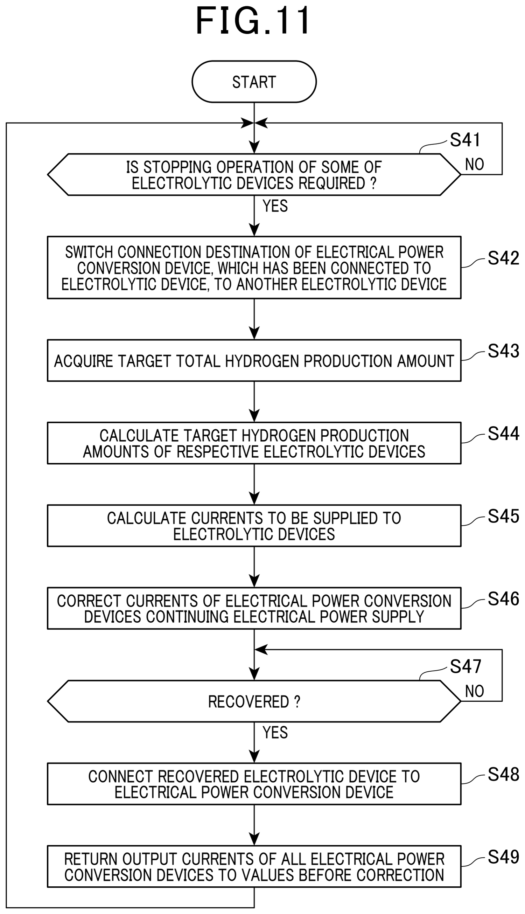

An example of a specific control method of the present embodiment will be described with reference to a flow diagram of FIG. 11.

First, in step S41, it is determined whether stopping operation of some of the electrolytic devices 2 (e.g., the electrolytic device 21) is required.

In step S41, when determining that a necessity of stopping operation of some of the electrolytic devices 2 (e.g., the electrolytic device 21) has arisen, the connection destination of the plurality of electrical power conversion devices 3 (e.g., the electrical power conversion devices 31, 32, 33), which have been connected to the electrolytic device 2 (e.g., the electrolytic device 21), is switched to another electrolytic device 2 (e.g., the electrolytic device 22) (step S42). That is, the switching relay 55 between the electrolytic device 2 (e.g., the electrolytic device 21) and the electrical power conversion devices 3 (e.g., the electrical power conversion devices 31, 32, 33) is switched. Hence, the electrical power conversion devices 3 (e.g., the electrical power conversion devices 31, 32, 33) are disconnected from the electrolytic device 2 (e.g., the electrolytic device 21) and are connected to another electrolytic device 2. Thus, for example, a state in which the electrical power conversion devices 31 to 36 are connected to the electrolytic device 22 can be made (refer to FIG. 10).

Next, the total target amount of hydrogen (that is, the target total hydrogen production amount) produced by the two electrolytic devices 2 (e.g., the electrolytic devices 22, 23) that are continuing operation is acquired (step S43). Then, the target hydrogen production amounts of the respective two electrolytic devices 2 (e.g., the electrolytic devices 22, 23) that are continuing operation are calculated (step S44).

Based on the acquired target hydrogen production amounts, currents to be supplied to the respective electrolytic devices 2 (e.g., the electrolytic devices 22, 23) are calculated (step S45). So that currents supplied to the respective electrolytic devices 2 become the currents calculated in step S45, currents of the respective electrical power conversion devices 3 are corrected (step S46).

Then, electrical power supply from the electrical power conversion devices 3 (e.g., the electrical power conversion devices 34 to 39) to the electrolytic devices 22, 23 is continued at the corrected current values (i.e. corrected values). The electrical power supply at the corrected currents is continued until the electrolytic device 2 whose operation has stopped (e.g., the electrolytic device 21) is recovered (step S47).

Then, in step S47, when determining that the electrolytic device 2 (e.g., the electrolytic device 21) has been recovered, the recovered electrolytic device 2 (e.g., the electrolytic device 21) is reconnected to the three electrical power conversion devices 3 (e.g., the electrical power conversion devices 31, 32, 33) (step S48). That is, the switching relay 55 between the recovered electrolytic device 2 (e.g., the electrolytic device 21) and the electrical power conversion devices 3 (e.g., the electrical power conversion devices 31, 32, 33) are switched to the recovered electrolytic device 2 side (e.g., the electrolytic device 21) (refer to FIG. 9). At the same time, in step S49, output currents of the nine electrical power conversion devices 31 to 39 are returned to values before correction, and the electrical power supply is continued. Then, the control flow is returned to step S41. Other configurations are similar to those of the third embodiment.

In the case of the present embodiment, even when the production of hydrogen of some of the electrolytic devices 2 is stopped, the plurality of electrical power conversion devices 3 can be effectively utilized. For example, while the production of hydrogen by the electrolytic device 21 is stopped, if the connection of the electrical power conversion device 3 cannot be switched, the electrical power conversion devices 31, 32 that have been connected to the electrolytic device 21 cannot be used.

In contrast, according to the present embodiment, for example, when the production of hydrogen by the electrolytic device 21 is stopped, the electrical power conversion devices 31, 32, 33 can be connected to another electrolytic device 22 by switching. Then, electrical power of the electrical power conversion devices 31, 32, 33 is added to electrical power of the electrical power conversion devices 34, 35, 36, and the electrical power can be supplied to the electrolytic device 22. As described above, according to the present embodiment, while the plurality of electrical power conversion devices 3 are effectively utilized, redundancy of the electrical power supply can be improved. In addition, effects similar to those of the third embodiment are obtained.

### (Fifth Embodiment)

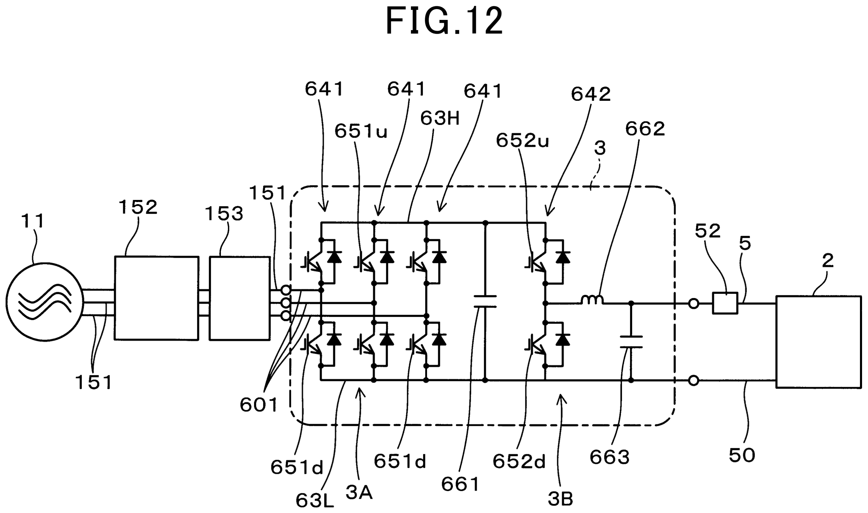

In the present embodiment, as illustrated in FIG. 12, a configuration example of the plurality of electrical power conversion devices 3 that the hydrogen production system 1 includes will be described. In FIG. 12, only one electrical power conversion device 3 is illustrated. However, the hydrogen production system 1 includes a plurality of electrical power conversion devices 3, which are connected in parallel with each other. This point is similar to that in the first embodiment.

The electrical power conversion device 3 has a first electrical power conversion unit 3A that converts three-phase AC power to DC power and a second electrical power conversion unit 3B that converts the DC power converted by the first electrical power conversion unit 3A to DC power with different voltage. The first electrical power conversion unit 3A and the second electrical power conversion unit 3B are connected by a high-potential side wiring 63H and a low-potential side wiring 63L.

The first electrical power conversion unit 3A has three or more legs (hereinafter, referred to as "first legs 641") connected in parallel with each other between the high-potential side wiring 63H and the low-potential side wiring 63L. Each of the first legs 641 includes an upper arm switch (hereinafter, referred to as "first upper arm switch 651u") connected to the high-potential side wiring 63H and a lower arm switch (hereinafter, referred to as "first lower arm switch 651d") connected to the low-potential side wiring 63L, which are connected in series.

The connection point between the first upper arm switch 651u and the first lower arm switch 651d of the first legs 641 is connected to an input wiring 601 to which three-phase AC power is inputted. A DC link capacitor 661 is connected between the high-potential side wiring 63H and the low-potential side wiring 63L and between the first electrical power conversion unit 3A and the second electrical power conversion unit 3B.

The second electrical power conversion unit 3B has one second leg 642, which is connected between the high-potential side wiring 63H and the low-potential side wiring 63L, and a reactor 662. The second leg 642 includes a second upper arm switch 652u connected to the high-potential side wiring 63H and a second lower arm switch 652d connected to the low-potential side wiring 63L, which are connected in series. A filter capacitor 663 is connected between the pair of power supply wirings 5 and 50 on the electrolytic device 2 side with respect to the reactor 662.

The reactor 662 is connected between the connection point between the second upper arm switch 652u and the second lower arm switch 652d of the second leg 642, and the power supply wiring 5. The low-potential side wiring 63L is connected to the power supply wiring 50. The power supply wiring 5 is connected to the positive electrode of the electrolytic device 2. The power supply wiring 50 is connected to the negative electrode of the electrolytic device 2.

The input wiring 601 is connected to a supply wiring 151 for supplying three-phase AC power from the three-phase AC power supply 11. The supply wiring 151 is provided with a precharge circuit 152 and a filter circuit 153. The precharge circuit 152 has, for example, a switch and a resistor and prevents an inrush current from flowing from the three-phase AC power supply 11 to the electrical power conversion device 3. The filter circuit 153 has, for example, an inductor and a capacitor and removes noise components of three-phase AC power supplied from the three-phase AC power supply 11. It is noted that the three-phase AC power supply 11 may be, for example, an electrical power system.

In the first electrical power conversion unit 3A of the electrical power conversion device 3, inputted three-phase AC power is converted to DC power by appropriate switching operation of the plurality of first upper arm switches 651u and the plurality of first lower arm switches 651d. The DC power is charged into the DC link capacitor 661. Then, in the second electrical power conversion unit 3B, the DC power is converted to DC power with appropriate voltage by appropriate switching operation of the second upper arm switch 652u and the second lower arm switch 652d, and the converted DC power is output. The outputted DC power is supplied to the electrolytic device 2.

Each of the first upper arm switch 651u, the first lower arm switch 651d, the second upper arm switch 652u, and the second lower arm switch 652d are connected in antiparallel with a freewheeling diode. Switching operation of the first upper arm switch 651u, the first lower arm switch 651d, the second upper arm switch 652u, and the second lower arm switch 652d is controlled by driving signals from the control unit 4. It is noted that each of the first upper arm switch 651u, the first lower arm switch 651d, the second upper arm switch 652u, and the second lower arm switch 652d may be configured by, for example, an IGBT (i.e., insulated gate bipolar transistor), a MOSFET (MOS field-effect transistor), or the like. Other configurations are similar to those of the first embodiment.

According to the present embodiment, three-phase AC power can be easily converted to desired DC power. In addition, the above electrical power conversion device 3 may be configured by using an electrical power conversion device for a vehicle such as an electric vehicle as the electrical power conversion device of the hydrogen production system 1. That is, the electrical power conversion device for a vehicle is connected between a drive battery and a drive motor of the vehicle. The electrolytic device 2 is connected to the side of the electrical power conversion device to which the drive battery is connected, and the three-phase AC power supply 11 is connected to the side of the electrical power conversion device to which the drive motor is connected, whereby the electrical power conversion device can be utilized for the hydrogen production system 1. In addition, effects similar to those of the first embodiment are obtained.

### (Sixth Embodiment)

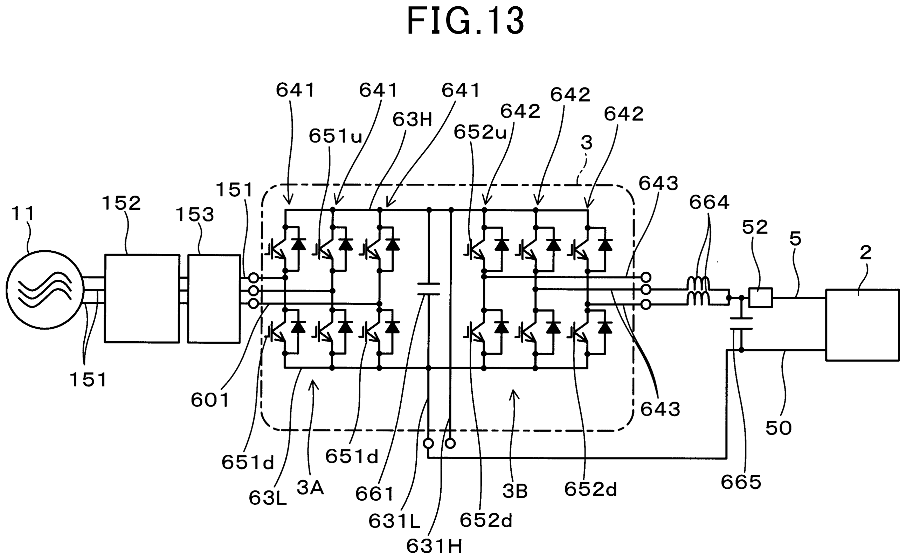

The present embodiment is, as illustrated in FIG. 13, a modification of the fifth embodiment and is another configuration example of the plurality of electrical power conversion devices 3 that the hydrogen production system 1 includes. In the present embodiment, the second electrical power conversion unit 3B of the electrical power conversion device 3 has a plurality of second legs 642. In the present embodiment, particularly, an example in which the second electrical power conversion unit 3B has three second legs 642 will be illustrated.

In addition, each connection point between the second upper arm switch 652u and the second lower arm switch 652d of each of the three second legs 642 is connected with an output wiring 643. Two of the three output wirings 643 are connected to the power supply wiring 5 connected to the positive electrode of the electrolytic device 2, via reactors 664. The last one of the three output wirings 643 is an idle wiring.

In addition, the low-potential side wiring 63L is connected to the power supply wiring 50 connected to the negative electrode of the electrolytic device 2, via an extraction wiring 631L. In addition, a filter capacitor 665 is connected between the power supply wiring 5 and the power supply wiring 50. It is noted that although the high-potential side wiring 63H is also connected with an extraction wiring 631H, the extraction wiring 631H is an idle wiring.

The second electrical power conversion unit 3B converts DC power to DC power with appropriate voltage by appropriate switching operation of the plurality of second upper arm switches 652u and the plurality of second lower arm switches 652d, and the converted DC power is output. However, the second upper arm switch 652u and the second lower arm switch 652d of the second leg 642 to which the output wiring 643, which is an idle wiring, is connected are not particularly subjected to switching operation, and are kept opened (i.e., disconnected) states. In addition, effects similar to those of the fifth embodiment are obtained.

In the above embodiment, although control that corrects a current of the electrical power conversion device has been described, control that corrects a voltage of the electrical power conversion device may be performed, or control that corrects both the voltage and the current of the electrical power conversion device may be performed.

The present disclosure is not limited to the above embodiments, and can be applied to various embodiments without departing from the spirit thereof.

Hereinafter, features of the present disclosure will be illustrated.
[1] A hydrogen production system (1), including:
   at least one electrolytic device (2, 21, 22, 23) that electrolyzes a raw material to produce hydrogen;
   a plurality of electrical power conversion devices (3, 31, 32, 33, 34, 35, 36, 37, 38, 39) that convert three-phase AC power to DC power and supply the DC power to the electrolytic device; and
   a control device (4) that controls at least one of the electrical power conversion devices, in which

   the electrolytic device is connected with the plurality of electrical power conversion devices connected in parallel with each other, and
   the control device is configured to:
      correct, when electrical power supply from some of the plurality of electrical power conversion devices to the electrolytic device is stopped, at least one of voltage and current of the electrical power conversion device that is continuing electrical power supply to the electrolytic device so that a later hydrogen production amount of the electrolytic device approaches a predetermined target amount; and
      set at least one of voltage and current of the electrical power conversion device to a corrected value.
[2] The hydrogen production system according to [1], in which
   the electrical power conversion device has:
      a first electrical power conversion unit (3A) that converts the three-phase AC power to DC power; and
      a second electrical power conversion unit (3B) that converts the DC power converted by the first electrical power conversion unit to DC power with different voltage,
   the first electrical power conversion unit and the second electrical power conversion unit being connected by a high-potential side wiring (63H) and a low-potential side wiring (63L),
   the first electrical power conversion unit has three or more legs (641) connected in parallel with each other between the high-potential side wiring and the low-potential side wiring, each of the first legs including an upper arm switch (651u) connected to the high-potential side wiring and a lower arm switch (651d) connected to the low-potential side wiring in series, and
   a connection point between the first upper arm switch and the first lower arm switch of the leg is connected to an input wiring (601) to which the three-phase AC power is inputted.
[3] The hydrogen production system according to [1] or [2], in which
   the at least one electrolytic device includes a plurality of electrolytic devices, the plurality of electrolytic devices are respectively connected with the plurality of electrical power conversion devices connected in parallel with each other, and
   the control device is configured to correct at least one of voltage and current of the plurality of electrical power conversion devices so that a total amount of hydrogen produced by the plurality of electrolytic devices approaches a predetermined target amount.
[4] The hydrogen production system according to [3], in which
   the control device is configured to correct, when operation of some of the plurality of electrolytic devices is stopped, at least one of voltage and current of the plurality of electrical power conversion devices so that a total hydrogen production amount of the other electrolytic devices that are continuing operation approaches a predetermined target amount.
[5] The hydrogen production system according to [3] or [4], in which
   the control device is configured to:
   connect, when production of hydrogen by some of the plurality of electrolytic devices is stopped, the electrical power conversion device connected to the stopped electrolytic device to some of the other electrolytic devices; and
   correct at least one of voltages and currents of the plurality of electrical power conversion devices so that a total amount of hydrogen produced by the electrolytic devices that are continuing production of hydrogen approaches a predetermined target amount.
[6] The hydrogen production system according to any one of [1] to [5], in which
   the control device is configured to stop, when an abnormality of some of the plurality of electrical power conversion devices has been detected, electrical power supply from the electrical power conversion device for which the abnormality has been detected to the electrolytic device.
[7] The hydrogen production system according to any one of [1] to [6], in which
   the control device is configured to stop, when some of the plurality of electrical power conversion devices is replaced, electrical power supply from the electrical power conversion device that will be replaced to the electrolytic device.
[8] The hydrogen production system according to any one of [1] to [7], in which
   while electrical power supply from some of the plurality of electrical power conversion devices to the electrolytic device is stopped, the control device sets at least one of voltage and current of the electrical power conversion device that is continuing electrical power supply to the electrolytic device to the corrected value.
[9] A hydrogen production method of producing hydrogen by a hydrogen production system (1) that includes:
   at least one electrolytic device (2, 21, 22, 23) that electrolyzes a raw material to produce hydrogen; and
   a plurality of electrical power conversion devices (3, 31, 32, 33, 34, 35, 36, 37, 38, 39) that convert three-phase AC power to DC power and supply the DC power to the electrolytic device, the electrolytic device being connected with the plurality of electrical power conversion devices connected in parallel with each other,
   the method including:
      correcting, when electrical power supply from some of the plurality of electrical power conversion devices to the electrolytic device is stopped, at least one of voltage and current of the electrical power conversion device that is continuing electrical power supply to the electrolytic device so that a later hydrogen production amount of the electrolytic device approaches a predetermined target amount; and
      setting at least one of voltage and current of the electrical power conversion device to a corrected value.
[10] The hydrogen production method according to [9], in which
   the electrical power conversion device has:
      a first electrical power conversion unit (3A) that converts the three-phase AC power to DC power; and
      a second electrical power conversion unit (3B) that converts the DC power converted by the first electrical power conversion unit to DC power with different voltage, the first electrical power conversion unit and the second electrical power conversion unit being connected by a high-potential side wiring (63H) and a low-potential side wiring (63L),
   the first electrical power conversion unit has three or more legs (641) connected in parallel with each other between the high-potential side wiring and the low-potential side wiring, each of the first legs including an upper arm switch (651u) connected to the high-potential side wiring 63H and a lower arm switch (651d) connected to the low-potential side wiring in series, and
   a connection point between the first upper arm switch and the first lower arm switch of the leg is connected to an input wiring (601) to which the three-phase AC power is inputted.
[11] The hydrogen production method according to [9] or [10], in which
   the at least one electrolytic device includes a plurality of electrolytic devices, the plurality of electrolytic devices are respectively connected with the plurality of electrical power conversion devices connected in parallel with each other, and
   the method further includes
      correcting at least one of voltage and current of the plurality of electrical power conversion devices so that a total amount of hydrogen produced by the plurality of electrolytic devices approaches a predetermined target amount.
[12] The hydrogen production method according to [11], further including
   correcting, when operation of some of the plurality of electrolytic devices is stopped, at least one of voltage and current of the plurality of electrical power conversion devices so that a total hydrogen production amount of the other electrolytic devices that are continuing operation approaches a predetermined target amount.
[13] The hydrogen production method according to [11], further including:
   connecting, when production of hydrogen by some of the plurality of electrolytic devices is stopped, the electrical power conversion device connected to the stopped electrolytic device to some of the other electrolytic devices; and
   correcting at least one of voltages and currents of the plurality of electrical power conversion devices so that a total amount of hydrogen produced by the electrolytic devices that are continuing production of hydrogen approaches a predetermined target amount.
[14] The hydrogen production method according to any one of [9] to [13], further including
   stopping, when an abnormality of some of the plurality of electrical power conversion devices has been detected, electrical power supply from the electrical power conversion device for which the abnormality has been detected to the electrolytic device.
[15] The hydrogen production method according to any one of [9] to [14], further including
   stopping, when some of the plurality of electrical power conversion devices is replaced, electrical power supply from the electrical power conversion device that will be replaced to the electrolytic device.
[16] The hydrogen production method according to any one of [9] to [15], further including
   setting, while electrical power supply from some of the plurality of electrical power conversion devices to the electrolytic device is stopped, at least one of voltage and current of the electrical power conversion device that is continuing electrical power supply to the electrolytic device to the corrected value.
[17] A program for controlling a hydrogen production system, the system including:
   at least one electrolytic device (2, 21, 22, 23) that electrolyzes a raw material to produce hydrogen;
   a plurality of electrical power conversion devices (3, 31, 32, 33, 34, 35, 36, 37, 38, 39) that convert three-phase AC power to DC power and supply the DC power to the electrolytic device; and
   a control device (4) that controls at least one of the electrical power conversion devices, the electrolytic device being connected with the plurality of electrical power conversion devices connected in parallel with each other,
   the program causing the control device to:
      correct, when electrical power supply from some of the plurality of electrical power conversion devices to the electrolytic device is stopped, at least one of voltage and current of the electrical power conversion device that is continuing electrical power supply to the electrolytic device so that a later hydrogen production amount of the electrolytic device approaches a predetermined target amount; and
      set at least one of voltage and current of the electrical power conversion device to a corrected value.

In the present disclosure and in the claims, the term "processor" refers to one or more hardware processors configured to execute processing defined by computer program code included in a computer program, by successively loading the computer program code (that is, one or more instructions of the computer program). In other words, the "processor" is a hardware device that executes one or more programmed processes. Accordingly, the computer program code may be regarded as software capable of defining the processing performed by the processor, depending on its content. The "processor" may be a general-purpose or a dedicated processor, such as a CPU, microprocessor, GPU, or DFP (Data Flow Processor), but is not limited thereto.

The term "memory" refers to one or more non-transitory tangible computer-readable storage medium, which are hardware memories configured to store computer program code and/or data in a manner accessible by a processor. The "memory" may be implemented using memory technologies and architectures such as SRAM, SDRAM, non-volatile memory, flash memory, or other types of memory.

In the present disclosure and in the claims, the term "circuit" refers to one or more hardware logic circuits configured to execute specific processing based on a predefined circuit design. In other words, the term "circuit" in the present disclosure and claims does not refer to a device in which processing is defined by software such as the above-described computer program code. Instead, it refers to a hardware device that executes specific processing based on its circuit configuration. For example, the "circuit" may include custom integrated circuits such as ASICs (Application Specific Integrated Circuits) or FPGAs (Field Programmable Gate Arrays) designed using a hardware description language (HDL). Accordingly, the term "circuit" as used in the present disclosure and claims includes all hardware circuits except for the above-described processors that execute processing by loading computer program code.

## Claims

1. A hydrogen production system (1), comprising:
at least one electrolytic device (2, 21, 22, 23) that electrolyzes a raw material to produce hydrogen;
a plurality of electrical power conversion devices (3, 31, 32, 33, 34, 35, 36, 37, 38, 39) that convert three-phase AC power to DC power and supply the DC power to the electrolytic device; and
a control device (4) that controls at least one of the electrical power conversion devices, wherein
the electrolytic device is connected with the plurality of electrical power conversion devices connected in parallel with each other, and
the control device is configured to:
correct, when electrical power supply from some of the plurality of electrical power conversion devices to the electrolytic device is stopped, at least one of voltage and current of the electrical power conversion device that is continuing electrical power supply to the electrolytic device so that a later hydrogen production amount of the electrolytic device approaches a predetermined target amount; and
set at least one of voltage and current of the electrical power conversion device to a corrected value.

2. The hydrogen production system according to claim 1, wherein
the electrical power conversion device has:
a first electrical power conversion unit (3A) that converts the three-phase AC power to DC power; and
a second electrical power conversion unit (3B) that converts the DC power converted by the first electrical power conversion unit to DC power with different voltage,
the first electrical power conversion unit and the second electrical power conversion unit being connected by a high-potential side wiring (63H) and a low-potential side wiring (63L),
the first electrical power conversion unit has three or more legs (641) connected in parallel with each other between the high-potential side wiring and the low-potential side wiring, each of the first legs including an upper arm switch (651u) connected to the high-potential side wiring and a lower arm switch (651d) connected to the low-potential side wiring in series, and
a connection point between the first upper arm switch and the first lower arm switch of the leg is connected to an input wiring (601) to which the three-phase AC power is inputted.

3. The hydrogen production system according to claim 1 or 2, wherein
the at least one electrolytic device comprises a plurality of electrolytic devices, the plurality of electrolytic devices are respectively connected with the plurality of electrical power conversion devices connected in parallel with each other, and
the control device is configured to correct at least one of voltage and current of the plurality of electrical power conversion devices so that a total amount of hydrogen produced by the plurality of electrolytic devices approaches a predetermined target amount.

4. The hydrogen production system according to claim 3, wherein
the control device is configured to correct, when operation of some of the plurality of electrolytic devices is stopped, at least one of voltage and current of the plurality of electrical power conversion devices so that a total hydrogen production amount of the other electrolytic devices that are continuing operation approaches a predetermined target amount.

5. The hydrogen production system according to claim 3 or 4, wherein
the control device is configured to:
connect, when production of hydrogen by some of the plurality of electrolytic devices is stopped, the electrical power conversion device connected to the stopped electrolytic device to some of the other electrolytic devices; and
correct at least one of voltages and currents of the plurality of electrical power conversion devices so that a total amount of hydrogen produced by the electrolytic devices that are continuing production of hydrogen approaches a predetermined target amount.

6. The hydrogen production system according to any one of claims 1 to 5, wherein
the control device is configured to stop, when an abnormality of some of the plurality of electrical power conversion devices has been detected, electrical power supply from the electrical power conversion device for which the abnormality has been detected to the electrolytic device.

7. The hydrogen production system according to any one of claims 1 to 6, wherein
the control device is configured to stop, when some of the plurality of electrical power conversion devices is replaced, electrical power supply from the electrical power conversion device that will be replaced to the electrolytic device.

8. The hydrogen production system according to any one of claims 1 to 7, wherein
while electrical power supply from some of the plurality of electrical power conversion devices to the electrolytic device is stopped, the control device sets at least one of voltage and current of the electrical power conversion device that is continuing electrical power supply to the electrolytic device to the corrected value.

9. A hydrogen production method of producing hydrogen by a hydrogen production system (1) that comprises:
at least one electrolytic device (2, 21, 22, 23) that electrolyzes a raw material to produce hydrogen; and
a plurality of electrical power conversion devices (3, 31, 32, 33, 34, 35, 36, 37, 38, 39) that convert three-phase AC power to DC power and supply the DC power to the electrolytic device, the electrolytic device being connected with the plurality of electrical power conversion devices connected in parallel with each other,
the method comprising:
correcting, when electrical power supply from some of the plurality of electrical power conversion devices to the electrolytic device is stopped, at least one of voltage and current of the electrical power conversion device that is continuing electrical power supply to the electrolytic device so that a later hydrogen production amount of the electrolytic device approaches a predetermined target amount; and
setting at least one of voltage and current of the electrical power conversion device to a corrected value.

10. The hydrogen production method according to claim 9, wherein
the at least one electrolytic device comprises a plurality of electrolytic devices, the plurality of electrolytic devices are respectively connected with the plurality of electrical power conversion devices connected in parallel with each other, and
the method further comprises
correcting at least one of voltage and current of the plurality of electrical power conversion devices so that a total amount of hydrogen produced by the plurality of electrolytic devices approaches a predetermined target amount.

11. The hydrogen production method according to claim 10, further comprising
correcting, when operation of some of the plurality of electrolytic devices is stopped, at least one of voltage and current of the plurality of electrical power conversion devices so that a total hydrogen production amount of the other electrolytic devices that are continuing operation approaches a predetermined target amount.

12. The hydrogen production method according to claim 10, further comprising:
connecting, when production of hydrogen by some of the plurality of electrolytic devices is stopped, the electrical power conversion device connected to the stopped electrolytic device to some of the other electrolytic devices; and
correcting at least one of voltages and currents of the plurality of electrical power conversion devices so that a total amount of hydrogen produced by the electrolytic devices that are continuing production of hydrogen approaches a predetermined target amount.

13. The hydrogen production method according to any one of claims 9 to 12, further comprising
stopping, when an abnormality of some of the plurality of electrical power conversion devices has been detected, electrical power supply from the electrical power conversion device for which the abnormality has been detected to the electrolytic device.

14. The hydrogen production method according to any one of claims 9 to 13, further comprising
stopping, when some of the plurality of electrical power conversion devices is replaced, electrical power supply from the electrical power conversion device that will be replaced to the electrolytic device.

15. The hydrogen production method according to any one of claims 9 to 14, further comprising
setting, while electrical power supply from some of the plurality of electrical power conversion devices to the electrolytic device is stopped, at least one of voltage and current of the electrical power conversion device that is continuing electrical power supply to the electrolytic device to the corrected value.

16. A program for controlling a hydrogen production system, the system comprising:
at least one electrolytic device (2, 21, 22, 23) that electrolyzes a raw material to produce hydrogen;
a plurality of electrical power conversion devices (3, 31, 32, 33, 34, 35, 36, 37, 38, 39) that convert three-phase AC power to DC power and supply the DC power to the electrolytic device; and
a control device (4) that controls at least one of the electrical power conversion devices, the electrolytic device being connected with the plurality of electrical power conversion devices connected in parallel with each other,
the program causing the control device to:
correct, when electrical power supply from some of the plurality of electrical power conversion devices to the electrolytic device is stopped, at least one of voltage and current of the electrical power conversion device that is continuing electrical power supply to the electrolytic device so that a later hydrogen production amount of the electrolytic device approaches a predetermined target amount; and
set at least one of voltage and current of the electrical power conversion device to a corrected value.
